(19) Europäisches Patentamt / European Patent Office / Office européen des brevets

(11) **EP 3 435 233 B1**

(12) **EUROPEAN PATENT SPECIFICATION**

(45) Date of publication and mention
of the grant of the patent:
**26.02.2020 Bulletin 2020/09**

(51) Int Cl.:
**G06F 11/07** *(2006.01)*     **G06F 11/00** *(2006.01)*

(21) Application number: **17306009.6**

(22) Date of filing: **27.07.2017**

(54) **A METHOD FOR IDENTIFYING CAUSALITY OBJECTS**

VERFAHREN ZUR IDENTIFIZIERUNG VON KAUSALITÄTSOBJEKTEN

UN PROCÉDÉ PERMETTANT D'IDENTIFIER DES OBJETS DE CAUSALITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.01.2019 Bulletin 2019/05**

(73) Proprietor: **Nokia Solutions and Networks Oy
02610 Espoo (FI)**

(72) Inventors:
• **KOSTADINOV, Dimitre Davidov
91620 NOZAY (FR)**
• **KUSHNIR, Dan
MURRAY HILL, NJ New Jersey 07974-0636 (US)**
• **AGHASARYAN, Armen
91620 NOZAY (FR)**
• **BOUZID, Makram
91620 NOZAY (FR)**

(74) Representative: **Loyer & Abello
9, rue Anatole de la Forge
75017 Paris (FR)**

(56) References cited:
**EP-A1- 3 128 425     US-A1- 2017 031 742
US-A1- 2017 123 885**

EP 3 435 233 B1

## Description

## Field of the invention

The invention relates to identifying causality objects comprising a causality link between two or more alerts. The invention applies particularly well to complex networks like cloud infrastructures, especially multi-tenant cloud infrastructures.

## Background of the invention

Data processing system like cloud infrastructures and more specifically multi-tenant cloud infrastructure are complex and dynamic.

Surveillance of such systems is challenged by the high volume of measurements, data and alerts to be processed. Often, a single fault or problem may produce multiple alerts in cascade, and a given alert can be caused by different faults: this creates ambiguities in the interpretation of alarms by the human operator, and also a possibly-overwhelming number of alerts presented to him.

As a consequence, it may be crucial to react quickly to alerts. A delayed understanding of the faults negatively impacts the customer satisfaction. Accordingly, an identification of a causality tree between alerts is an essential feature for providing a good quality of service recovery.

Existing solutions can only derive pairwise causality relationships from alerts analysis, which is not satisfying for building a causality tree of complex multiple alerts.

EP3128425 discloses a method for smart alert. The method includes aggregating the one or more alerts by identifying correlated group of alerts by pruning of one or more jobs and alerts, detecting correlations between the two or more alerts and deriving causality of the grouped alerts.

## Summary of the invention

Aspects of the disclosure are based on the idea of identifying causality objects comprising causality relationships between two or more alerts in a processing cost-efficient manner.

Aspects of the disclosure are based on the rule that, if the alerts of a combination of alerts are source alerts causing a plurality of consequences alerts, then each single consequence alert of the plurality of consequences alerts is a consequence of the combination of alerts. This rule acts as an "AND-operator" and enables lowering the processing cost for identifying causality relationships between more than two alerts.

In an embodiment, the invention provides a method for identifying causality objects comprising a causality link between two or more alerts, wherein an alert is produced by a fault occurring in a node of a cloud environment comprising nodes for running application programs, the method comprising:

- receiving a set of alerts,
- forming all possible combinations of a number k+1 of the alerts of the set, wherein the number k is firstly set to one, wherein for the number k equal to one, the possible combinations are formed by combining two different alerts of the set, whereas for a number k higher than one, the possible combinations are formed by combining a filtered combination of a number k of alerts and an alert of the set which is not part of the filtered combination,
- for each possible combination of k + 1 alerts, detecting a co-occurent combination if the k+1 alerts of the combination are co-occurent, wherein a co-occurrence is detected as a function of one or more co-occurrence rule,
- for a detected co-occurent combination of k+1 alerts, detecting if there is a causality link between a subset of k alerts of the combination of k+1 alerts and the last alert of the combination, as a function of one or more causality rule,
- as a function of detecting that there is a causality link, storing a causality object in a causality repository, wherein the causality object comprises an oriented link originating from the subset of k alerts of the combination of k+1 alerts identified as source alerts of the causality object, and pointing to the last alert of the combination of alerts identified as an end alert of the causality object,
- filtering a possible combination of a number k+1 alerts, wherein the possible combination of a number k+1 alerts is a filtered combination of a number k+1 of alert if the possible combination of a number k+1 alerts is a co-occurent combination of alerts in which no causality link has been detected,
- iterating to the step of forming and increasing the number k by one until the number k is equal to the number of alerts of the set or until no combination of a number k+1 of alerts has been filtered.

As a result of the process being applied to a set of alerts, a set of causality objects stored in a causality repository, for example a database, is obtained.

The oriented link denotes a causality relationship between the source alert and the end alert.

Thanks to this set of causality objects, it is possible to analyze an apparently stochastic stream of alerts produced over time in a distributed data-processing system in order to discover a logical structure of events that led to the alerts being produced.

Thanks to these features, the causality objects may be discovered efficiently even in a complex cloud infrastructure.

In embodiments, such a method can comprise one or more of the features below.

In an embodiment, each alert is associated with one or more timestamp, each timestamp comprising a start date when the alert is detected to start, wherein a co-occurence rule is selected in the list consisting in:

the start dates of adjacent timestamps of alerts of the combination are separated by a period lower than a threshold period,

the frequency of having the start dates of adjacent timestamps of alerts of the combination separated by a period lower than a threshold period is higher than the frequency of having the start dates of two adjacent respective timestamps of random alerts lower than the threshold period,

some or each start dates of respective adjacent timestamps of alerts of the combination occur within a same respective time slot, wherein a time slot is an elementary partition of a selected time delay in which the alerts of the combination occur,

an overlap duration is higher than a selected overlap duration threshold, wherein an overlap duration is a delay during which the alerts of the combination are all active, each timestamp further comprising an end date when the alert is detected to end, wherein an alert is active between the start date and the end date of a same timestamp.

A causality rule may be selected in various causality rules. For example, the causality rule may be a function of a match between a registered topological pattern and a topological link of nodes of the cloud environment to which alerts are attached. For example, the causality rule may be a function of a match between a registered time pattern and timestamps to which alerts are associated.

In embodiments, each alert is associated with one or more timestamp, each timestamp comprising a start date when the alert is detected to start and an end date when the alert is detected to stop, wherein a causality rule is selected in the list consisting in:

• the start dates of adjacent timestamps of the alerts of a subset of k alerts of the combination of k+1 alerts are always prior to the start date of adjacent timestamps of the last alert of the combination of k+1 alerts,

• the start dates of adjacent timestamps of the alerts of a subset of k alerts of the combination of k+1 alerts are always prior to the start dates of adjacent timestamps of the last alert of the combination of k+1 alerts, and the end dates of the adjacent timestamp of the alerts of the subset of k alerts of the combination of k+1 alerts are always following to the end dates of the adjacent timestamps of the last alert of the combination of k+1 alerts,

• each start date of adjacent timestamps of the alerts of a subset of k alerts of the combination of k+1 alerts is always followed by a start date of an adjacent timestamp of the last alert of the combination of k+1 alerts,

• overlap durations of the last alert of the combination of k+1 alerts combination with the alerts of the subset of k alerts increases over the time, wherein an overlap duration is a delay during which the alerts of the combination are all active.

The causality link represents that the alerts of the complementary subset of alerts of the combination are consequences of the alerts of the subset of alerts of the combination.

In embodiments, the step of detecting if there is a causality link between a subset of k alerts of the combination of k+1 alerts and the last alert of the combination further comprises, for each detected co-occurent combination of k+1 alerts, a step of:

• forming a subset of k alerts of the detected co-occurent combination of k+1 alerts,

• for the possible combination of a subset of k alerts, detecting if the last alert of the detected co-occurent combination of k+1 alerts is a consequence of the subset of k alerts as a function of the one or more causality rule.

In embodiments, the subset of k alerts is a first subset of k alerts, the method further comprising:

• detecting that the last alert of the detected co-occurent combination of k+1 alerts is not a consequence of the first subset of k alerts,

• forming a second subset of k alerts of the detected co-occurent combination of k+1 alerts,

• for the second subset of k alerts, detecting if the last alert of the detected co-occurent combination of k+1 alerts is a consequence of the subset of k alerts as a function of the one or more causality rule.

The invention also provides a method for identifying a causality relationship between one or more alerts, comprising the method for identifying causality objects, and a step of:

• assembling a plurality of causality objects to build an oriented causality tree, wherein a first causality object can only be assembled to a second causality object if the end alert of the first causality object is identical to the source alert of the second causality object.

Such a causality tree makes it possible to identify a root cause for a chain of alerts and make a decision as to the more efficient way of resolving the corresponding faults affecting the distributed data-processing system.

The invention also provides a device for identifying causality objects comprising a causality link between two or more alerts, wherein an alert is produced by a fault occurring in a node of a cloud environment comprising nodes for running application programs, the device comprising:

- an input interface configured for receiving a set of alerts,
- a filtered combination repository comprising filtered combination of a number k of alerts,
- an alert combination module connected to the input interface and to the filtered combination repository, the alert combination module being further configured for forming all possible combinations of a number k+1 of the alerts of the set, wherein

  ○ the number k is firstly set to one, and for the number k equal to one, the possible combinations are formed by combining two different alerts of the set, whereas
  ○ for a number k higher than one, the possible combinations are formed by combining a filtered combination of a number k of alerts and an alert of the set which is not part of the filtered combination,
  ○ the alert combination module being further configured for sending the formed possible combinations of a number k+1 alerts to a causality potential estimator module,

- the causality potential estimator module being adapted to, for each possible combination k+1 alerts, detect a co-occurent combination if the k+1 alerts of the combination are co-occurent, wherein
  ○ a co-occurrence is detected as a function of one or more co-occurrence rule, the causality potential estimator module being further configured to send the co-occurent combination to a causality evaluator module,
- the causality evaluator module being adapted to, as a response to receiving the co-occurent combination of k+1 alerts,

  ○ detecting if there is a causality link between a subset of k alerts of the combination of k+1 alerts and the last alert of the combination, as a function of one or more causality rule, and,
  ○ as a function of detecting that there is a causality link, sent the causality object to a causality repository, wherein the causality object comprises an oriented link originating from the subset of k alerts of the combination of k+1 alerts identified as source alerts of the causality object, and pointing to the last alert of the combination of alerts identified as an end alert of the causality object, and being further configured to,
  ○ as a function of detecting that there is no causality link, sending the co-occurent combination to the filtered combination repository,

- the alert combination module being further configured for:
  ○ iterate to the step of forming and increase the number k by one until the number k is equal to the number of alerts of the set.

The invention also provides a computer program product comprising instructions executable by a data processing device for performing the method as describes above.

Further features and advantages of the invention will appear from the following description of embodiments of the invention, given as nonlimiting examples, with reference to the accompanying drawings listed hereunder.

## Brief description of the drawings

Fig. 1 shows a schematic of a causality discovering device.
Fig 2 represents a schematic of iterations of a method performed by the causality discovering device of figure 1 on a set of alerts, wherein a causality is discovered at a second iteration between two alerts,
Fig 3 represents a schematic of iterations of the method performed by the causality discovering device of figure 1 on the set of alerts of Figure 2, wherein two alerts are further identified as not co-occurent,
Fig 4 represents a schematic of iterations of the method performed by the causality discovering device of figure 1 on the set of alerts of Figure 2, wherein both a causality is discovered at a second iteration between two alerts and two alerts are further identified as not co-occurent,
Fig. 5 represents a schematic of two alerts having different timestamps for illustration of application of a first causality rule.
Fig. 6 represents a schematic of two alerts having different timestamps for illustration of application of a first causality rule
Fig 7 represents a causality tree recovered from causality links between the set of alerts of Figure 2 thanks to the method performed by the causality discovering device of Figure 1.

## Detailed description of the embodiments

According to embodiments of the invention, large and complex data processing systems like multi-tenant cloud infrastructures are addressed.
A multi-tenant cloud infrastructure allows mutualizing the resources, e.g. host machines, which are hardware machines, among several clients or "tenants". Each tenant can use the cloud infrastructure in an independent way of the others, by creating, migrating, stopping, destroying resources such as virtual machines (VM) and running application on the resources.

Sometimes, faults occur in the multi-tenant cloud infrastructure and the complexity and the dynamicity of the topology of the cloud infrastructure makes it difficult to retrieve the root fault in a chain of propagating faults.

Alerts of a set of alerts occur in a network environment.

*Temporal considerations:*

The alerts of the set of alerts are associated to one or more timestamp, each comprising the date when an alert occurs, referred to as start date in the following, and the date when an alert ends, referred to as end date in the following. The alert is active between the start date and the end date, and is inactive before the start date and after the end date.

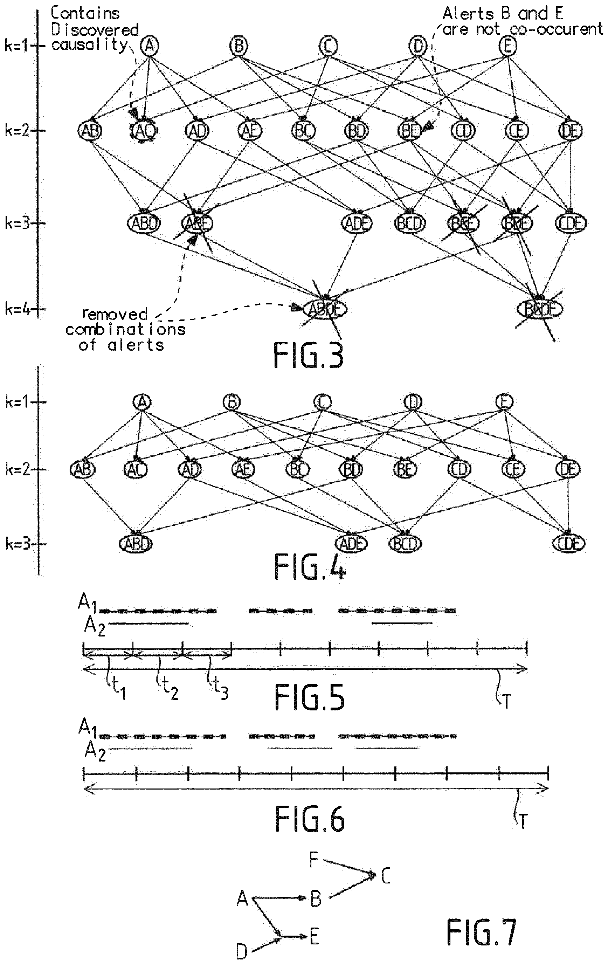

An alert may occur in series in a selected time period. For example, an alert referenced by $A_1$ is represented by a series of three dash lines on Figure 5. Therefore the alert $A_1$ is associated to three timestamps, each comprising a start date and an end date. The alert $A_1$ is active each time between the start date and the end date of each timestamp.

The detection of a start date or end date of an alert may by shifted in time by comparison to the date the alert really starts or stops, due to the network delay or the metering frequency.

In order to avoid the extra delay added by the shift, a margin is added to each start or stop date. The margin is equal to the sum of network delay and metering frequency difference.

The alert log timeline is partitioned into time slots. For example, such a partition of the selected time period enables determining in an easier manner a frequency of co-occurrence of start dates of two alerts or of stop dates of two alerts.

The duration of the time slots may be homogeneous or not. For example, a first selected time period within the alert log timeline may be partitioned in time slots having a first duration and a second selected time period within the alert log timeline may be partitioned in time slots having a second duration, wherein the first duration and the second duration are selected as a function of determined characteristics of some alerts occurring within the respective selected time periods. The determined characteristics may be for example a mean duration between the start dates and the end dates of an alert, or a relative frequency of occurrence of the start dates of an alert etc.

In general, the duration of the time slots are selected as a trade-off between the computation effort to infer causality and the efficiency of detection of start dates or end dates of alerts.

Namely, a too large duration implies missing the identification of some causality objects. By contrast, a too small duration implies increasing the computation effort.

With reference again to Figure 5 as well as Figure 6, a selected time period T is represented. The selected time period T is partitioned into time slots $t_i$, where i denotes an integer. The first time slots $t_1$, $t_2$ and $t_3$ of the selected time period T are represented on Figure 5.

*Causality discovering device:*

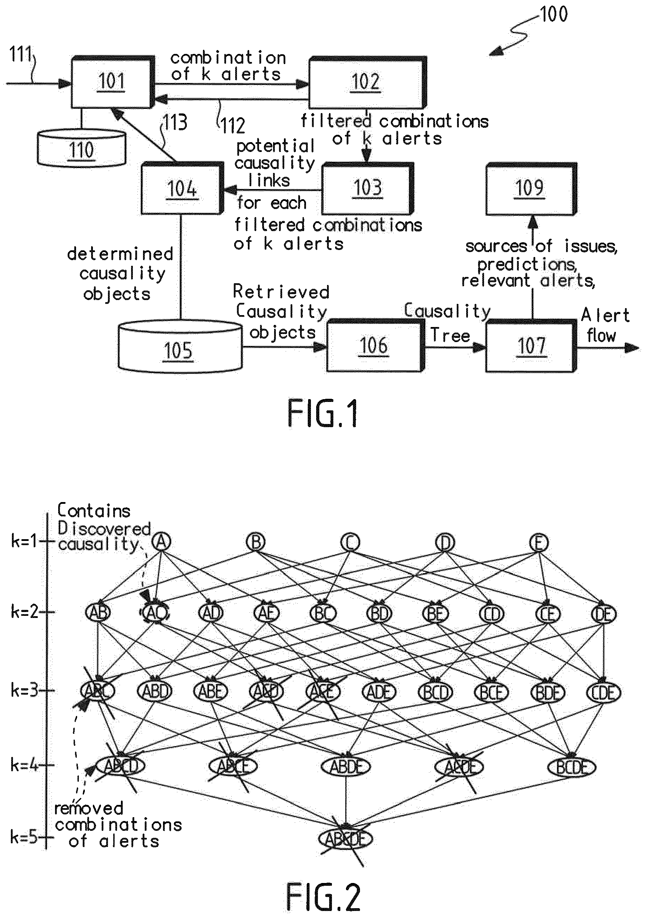

Figure 1 represents a causality discovering device 100 for retrieving causality objects in a set of alerts.

The causality discovering device 100 comprises a plurality of modules: an alert combination module 101, a causality potential estimator module 102, a causality test generator module 103, a causality evaluator module 104, a discovered causality database 105, a causality graph builder module 106, a causality usage module 107 and a notification and recovery module 108.

The causality discovering device 100 is configured to receive a log of alerts as represented by arrow 111. The log of alerts comprises a set of alerts associated to associated timestamps in a selected time period T.

The causality discovering device 100 is configured to produce, in the discovered causality database 105, causality objects which are used in the causality graph builder module 106 to build a causality tree between alerts of the set of alerts.

This causality tree is sent to the causality usage module 107 in order to use it for a causality usage which is set up in the causality usage module 107.

A non-exhaustive list of causality usages is the following:

    1. Identify the root node(s) of faults: matching the root alert in the causality tree, wherein the root alert is the first source alert of the causality tree in order to identify a resource or a node associated with the root alert.

    2. Infer a missing alert, wherein a missing alert is a missing junction point in the causality tree which was not identified or associated to a causality object.

    3. Predict propagation of faults by building patterns from the built causality tree in order to enable predicting future effects of faults and anticipate those consequences,

    4. Filter irrelevant alerts, wherein the irrelevant alerts may be filtered by comparison with the built patterns. Indeed, modern large scale systems produce a very large number of alerts which makes it hard to investigate and understand the system's state. Filtering irrelevant alerts makes it possible to decrease the number of alerts to consider in the very large number of alerts, and thus simplify the analysis,

    5. Prioritize alerts, wherein priority alerts may be determined by comparison with the built patterns. Indeed, the causality tree enables differentiating between criticality of alerts because the causality tree makes it possible to identify the impact of each alert on the other components of the system.

The causality discovering device 100 further comprises a notification and recovery module 109, which is connected to the causality usage module 107.

The notification and recovery module 109 receives as an input the results of the causality usage and performs actins to recover the system, in the case where automatic recovery is possible, or notifies the system administrator of the source of problems so she/he can fix the issues.

*Providing causality objects from a set of alerts:*

The method performed by the set of modules comprising the alert combination module 101, the causality potential estimator module 102, the causality test generator module 103, and the causality evaluator module 104 in order to produce the causality objects will now be described more in detail with reference to Figures 2-4.

From the set of alerts, combinations of alerts will be built iteratively in order to explore the combinations of alerts which are linked by a causality relationship.

The method performed is an iterative method. The iterations are denoted by k.

An example of the first iteration 1 is represented on the Figure 2 by a set of five alerts, each being represented by a circle comprising the name of the alert, on the same line as the denotation k=1 of the first iteration 1. The alerts of the set of alerts represented on the Figures 2-4 and 7 are referenced by the following letters: A, B, C, D and E.

For the sake of illustration, a set of five alerts is represented, but the set of alerts may comprise any number of alerts.

The alert combination module 101 is configured to build combinations of k alerts at each iteration k as explained below. For the sake of simplicity, a combination of a plurality of alerts $A_i$ will be denoted in the following $\{A_i\}$. For example, a combination between alerts $A_1$, $A_2$ and $A_3$ will be denoted $A_1A_2A_3$.

On each iteration k, the theoretical combinations of alerts comprise a number k of the alerts of the set. Therefore, on each iteration k, the number of theoretical combinations of alerts is equal to

$$\binom{n}{k} = \frac{n!}{(n-k)! \times k!}$$

, where n denotes the number of alerts of the set.

Therefore Figure 2 represents a semi-lattice starting with single alerts and building combinations of k alerts from the set of alerts at the iteration k.

For example, at the second iteration 2, all the possible combinations from two alerts of the set of five alerts A, B, C, D and E are represented on Figure 2 by circles comprising the name of the combined two alerts: AB, AC, AD, AE, BC, BD, BE, CD, CE and DE. The number of theoretical combinations is equal to

$$\binom{n=5}{k=2} = 10.$$

However, for efficiency purpose, all the $\binom{n}{k}$ theoretical combinations will not be searched, as further explained.

Indeed, the combinations at iteration k are built by considering filtered combination of alerts at the iteration k-1.

The alert combination module 101 is connected to the filtered combination repository 110. The filtered combination repository 110 comprises filtered combinations of alerts.

At the iteration k, the alert combination module 101 is configured to build a combination of k alerts from each filtered combination of k-1 alerts stored in the filtered combination repository 110 and the alerts of the set of alerts which are not part of the filtered combination of k-1 alerts.

For example, if the filtered combination repository 110 only comprises the unique following filtered combinations of alerts: combination AB, the alert combination module 101 is configured to produce every combination from the combination AB and the alerts of the set which are not part of the alerts of the combination AB. As the alerts C, D and E are not part of the combination of alerts AB, the alert combination module 101 is configured to produce the following combinations of alerts at iteration 3: combinations ABC, ABD and ABE.

The filtering is performed by the following modules: causality potential estimator module 102, causality test generator module 103 and causality evaluator module 104 as it is further explained below.

The causality potential estimator module 102 tests if the alerts of a combination of alerts are co-occurent, i.e. if the alerts of the combination occur at same moments.

Determining if alerts of a combination of alerts are co-occurent is useful to determine a potentiality that the alerts of the combination may be linked by a causality link.

Determination of the co-occurrence is performed as a function to one or more co-occurrence rule.

As an example, a co-occurrence rule is a function for determining that some or all start dates of adjacent timestamps of alerts of the combination are separated by a period lower than a threshold period.

As an example, a co-occurrence rule is a function for determining that some or all start dates of adjacent timestamps of alerts of the combination occur within a respective same time slot.

As another example, a co-occurrence rule is a function for determining that the frequency of having the dates of adjacent timestamps of alerts of the combination separated by a period lower than a threshold period is higher than the frequency of having the dates of two adjacent respective timestamps of random alerts. This last co-occurrence rule is namely useful to determine co-occurrence for alerts occurring rarely in a lapse of time.

As an example, co-occurrence rule is a function for determining that an overlap duration is higher than a selected overlap duration threshold. The overlap duration is a delay during which all the alerts of the combination are all active.

For example, one may understand by the phrase "an alert occurs rarely" that the alert only occurs once or twice in the selected time period, or that the ratio of frequency of occurrence of the alert and the frequency of occurrence of the most frequent alert is lower than a determined threshold, for example lower than 0.1.

As a response to determining that the alerts of a combination of alerts are co-occurent, the causality potential estimator module 102 sends the co-occurent combination of alerts to the causality test generator module 103.

As a response to determining that the alerts of a combination of alerts are not co-occurent, the causality potential estimator module 102 filters the combination of alerts.

Filtering the combination of alerts at the causality potential estimator module 102 stage may be performed in different manners. For example, the filtering may be performed by preventing the sending of a non-co-occurent combination of alerts to the causality test generator module 103. For example, the filtering is performed by sending the non-co-occurent combination of alerts to the alert combination module 101 in order that the alert combination module 101 removes from the combinations of alerts stored in the filtered combination repository 110 the received non-co-occurent combination of alerts. This last example is illustrated on Figure 1 by the arrow 112. In all cases, a combination of alerts which is not determined as being not co-occurent is a filtered combination of alerts and is sent to the causality test generator module 103.

Therefore the filtered combinations of alerts are the combination in which the alerts are potentially linked by a causality link. The other combinations are not co-occurent and are removed from the combinations of alerts having a potential causality link.

This filtering is selected on the observation that the number of co-occurrences decreases when adding new alerts to a set of alerts. In other words, if alerts in a given combination of alerts do not occur enough times at the same moment, then none of the combinations formed from the given combination and another alert will occur at the same moment.

A removing of a non-co-occurent combination of alerts is represented on Figure 3.

Figure 3 represents the same semi-lattice as Figure 2, apart from some combinations of alerts removed as described later.

At the iteration k=2, the causality test generator module 103 determines that the combination BE of the alert B and the alert E is not co-occurent, i.e. that the alerts A and E are not co-occurent. As a consequence, the combination BE is not a filtered combination. By contrast, the combination BE is removed from the combinations taken into account in the following iterations, as represented by crosses over the theoretical combinations ABE, BCE, BDE at the iteration 3 and ABDE and BCDE at the iteration 4 on the semi-lattice on Figure 3.

As a function to receiving a filtered combination of alerts, the causality test generator module 103 generates the different potential causality links from the filtered combination of alerts.

A causality link is an oriented link indicating a causal relationship between one or more source alert and a consequence alert, wherein the source alert is the cause of the consequence alert.

For the sake of simplicity, a causality link between a unique source alert $A_1$ and a consequence alert $A_2$, will be denoted in the following $A_1 \rightarrow A_2$, wherein the causality link is represented by an arrow oriented from the source alert $A_1$ to the consequence alert $A_2$. Similarly, a causality link between a plurality of source alerts {Ai} and a consequence alert Aj will be denoted $\{A_i\} \rightarrow A_j$, wherein i and j are positive integers and j≠i.

For example, a causality link between source alerts $A_1$ and $A_2$ and a consequence alert $A_3$ will be denoted $A_1 A_2 \rightarrow A_3$.

At an iteration k, each combination of alerts comprises k alerts $A_i$, wherein i is an integer from 1 to k.

The causality test generator module 103 therefore generates all the k possible potential causality links: $\{A_i\} \rightarrow A_j$, wherein $A_j \neq A_i$, wherein {Ai} represents a source subset of alerts of the combination which is the cause of the consequence alert $A_j$ of the combination of alerts.

At the iteration k=2, each combination of alerts comprises two alerts, for example a first alert $A_1$ and a second alert $A_2$.

For the combination $A_1 A_2$, the causality test generator module 103 therefore generates the two possible potential causality links: $A_1 \rightarrow A_2$ and $A_2 \rightarrow A_1$.

At the iteration k=3, the combination of alerts comprises three alerts, for example $A_1$, $A_2$ and $A_3$.

The causality test generator module 103 therefore generates the three possible potential causality links: $A_1 A_2 \rightarrow A_3$, $A_1 A_3 \rightarrow A_2$ and $A_2 A_3 \rightarrow A_1$.

Each generated potential causality link will be then tested by the causality evaluator module 104, as explained below.

The causality Evaluator module 104 is configured to test each potential causality link received from the causality test generator module 103 as a function to one or more causality rule.

For example, applications of some different causality rules are illustrated with reference to Figures 5 and 6.

With reference to Figure 5, two alerts $A_1$ and $A_2$ are represented over the time in a selected delay T. As

represented, the alert $A_1$ occurs three times while the alert $A_2$ occurs only twice. Moreover, the alert $A_2$ starts after a start of the alert $A_1$ each time the alert $A_2$ occurs. The alert $A_2$ ends before an end of the alert $A_1$ each time the alert $A_2$ occurs.

With reference to Figure 6, two alerts $A_1$ and $A_2$ are represented over the time in a selected delay T. As represented, both the alerts $A_1$ and $A_2$ occur three times. The first time, the alert A1 starts before the alert A2 and stops before the alert A2. The second time, the alert A1 starts before the alert A2 but stops after the alert A2. The third time is similar to the first time.

Various causality rules can be selected in order to test a potential causality link $\{A_i\} \to A_j$ between alerts $A_i$, as described below.

For example, a first causality rule is a Boolean function of a potential causality link $A \to B$, which returns the result "true" when detecting that an alert B always starts after an alert A or the alerts of a combination of alerts A.

This first causality rule is based on the assumption that if an alert A is causing an alert B, then when the alert A occurs, B should occur shortly after.

Detecting that an alert starts before another alert is performed by comparing the start dates of the start timestamp of the alert to the start dates of the start timestamp of the other alert.

In the examples of Figure 5 or of Figure 6, the first causality rule returns the result "true" to the input "$A_1 \to A_2$ and "false" to the input "$A_2 \to A_1$".

For example, a second causality rule is a Boolean function of a potential causality link $A \to B$, which returns the result "true" when detecting that an alert B always starts after and stops before an alert A or the alerts of a combination of alerts A.

This second causality rule is based on the same assumption as the assumption made for the first causality rule and another assumption, which is that a source alert A will disappear before a consequence alert B as a cause disappear before the consequence.

In the example of Figure 5, the second causality rule returns the result "true" to the input "$A_1 \to A_2$ and "false" to the input "$A_2 \to A_1$". In the example of Figure 6, the second causality rule returns the result "false" to the input "$A_1 \to A_2$ and "false" to the input "$A_2 \to A_1$".

For example, a third causality rule is a Boolean function of a potential causality link $A \to B$, which returns the result "true" when detecting that the alert B occurs each time the alert A occurs.

In the example of Figure 5, the third causality rule returns the result "false" to the input "$A_1 \to A_2$ and "false" to the input "$A_2 \to A_1$". In the example of Figure 6, the third causality rule returns the result "true" to the input "$A_1 \to A_2$ and "true" to the input "$A_2 \to A_1$".

For example, a fourth causality rule is a Boolean function of a potential causality link $A \to B$, which returns the result "true" when detecting that an overlap of an alert B and an alert A or the alerts of a combination of alerts A increases over the time in a series of occurrences of the alerts A and B.

For example, a fifth causality rule is a Boolean function of a potential causality link $A \to B$, which returns the result "true" when detecting that an alert B is active each time an alert A or the alerts of a combination of alerts A is active and further detecting that the alert B is inactive each time the alert A or the alerts of the combination of alerts A is inactive.

The causality evaluator module 104 may be set on one or any combination of the first, second, third, fourth or fifth causality rule.

The causality evaluator module 104 is configured to identify a potential causality link as a causality object when the set up causality rule returns a "true".

The causality evaluator module 104 is further configured to store the causality object in the discovered causality database 105.

The causality evaluator module 104 is configured to identify a combination of alerts in which each potential causality link causes the set up causality rule returns a "false" as a filtered combination of alerts.

The causality evaluator module 104 is further configured to send all the filtered combinations of alerts to the alert combination module 101, as represented by the arrow 113.

As a consequence, the combinations of alerts at the iteration k are - all the combinations of k alerts of the initial set of alerts, apart from the combinations of k alerts comprising either:

- non co-occurent combinations of k-1 alerts, which have been determined by the causality potential estimator module 102 at the iteration k-1, or
- a combination of k-1 alerts which comprises a causality link determined to be a causality object, as determined by the causality evaluator module 104 at the iteration k-1.

An example of the consequence of the determination of a causality link between two alerts is represented with reference again to Figure 2.

At the iteration k=2, the causality evaluator module 104 applies one of the causality rule on the potential causality links: $A \to C$ and determines the result "true".

As a consequence, at the iteration 3, the alert combination module 101 does not form the following combinations of alerts: ABC, ACD and ACE, which are removed from the combinations taken into account in the following iterations, as represented by crosses over the theoretical combinations ABCD, ABCE, ACDE at the iteration 4 and ABCDE at the iteration 5 on the semi-lattice on Figure 2.

The filtering of the combinations of alerts performed both by the causality potential estimator module 102 and the causality evaluator module 104 reduces the number of combination of alerts which should be tested to determine a causality object.

Figure 4 represents the remaining combinations of alerts of the semi-lattices of Figures 2 and 3.

The combination of alerts remaining to be tested at the iteration k=4 are only four instead of ten.

After the last iteration, all the causality objects of all the combination of alerts have been discovered and stored in the discovered causality database 105.

*Providing a causality tree from a set of causality objects:*

The causality graph builder module 106 receives a set of causality objects from the discovered causality database 105.

The causality graph builder module 106 is configures to combine the causality objects of the set to form a tree.

The tree of causalities has nodes, which are the alerts, and oriented causality link between the nodes.

The tree reveals transitive causalities between alerts which did not necessarily co-occur in at the same time, for example because of causality propagation delays.

For example, from the two following causality objects:
A→B and B→C, the causality graph builder module 106 determines that A→C.

For example, the causality graph builder module 106 receives the following set of causality objects:
A→B, B→C, AD→E, F→C

The causality graph builder module 106 returns the causality tree represented with reference to Figure 7.

On Figure 7, the alerts are represented by their name, i.e. the letters "A" to "F". The oriented causality link between a source alert and a consequence alert is represented by an arrow and the oriented causality link between two source alerts and a consequence alert is represented by two arrows joining each other at the middle of the distance between the two source alerts and the consequence alert.

The elements as the modules 101, 102, 103, 104, 106, 107 and 109 as well as the candidate nodes of the cloud environment could be e.g. hardware means like e.g. an ASIC, or a combination of hardware and software means, e.g. an ASIC and an FPGA, or at least one microprocessor and at least one memory with software modules located therein. The modules 101, 102, 103, 104, 106, 107 and 109 as well as the candidate nodes of the cloud environment may be implemented in a unitary or in a distributed manner. An element may be implemented directly on the multi-tenant cloud or on dedicated hardware computers.

The invention is not limited to the described embodiments. The appended claims are to be construed as embodying all modification and alternative constructions that may be occurred to one skilled in the art, which fairly fall within the basic teaching here, set forth. Namely, even referred to as a database, the discovered causality database 105 of the present disclosure may be implemented by any kind of data repository as for example a memory, a database, a file or any data container. The same applies to the filtered combination repository 110.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A method for identifying causality objects comprising a causality link between two or more alerts, wherein an alert is produced by a fault occurring in a node of a cloud environment comprising nodes for running application programs, the method comprising:

    - receiving (111) a set of alerts (A to E),
    - forming all possible combinations of a number k+1 of the alerts of the set, wherein the number k is firstly set to one, wherein for the number k equal to one, the possible combinations are formed by combining two different alerts of the set, whereas for a number k higher than one, the possible combinations are formed by combining a filtered combination of a number k of alerts and an alert of the set which is not part of the filtered combination,
    - for each possible combination of k+1 alerts, detecting a co-occurent combination if the k+1 alerts of the combination are co-occurent, wherein a co-occurrence is detected as a function of one or more co-occurrence rule,
    - for a detected co-occurent combination of k+1 alerts, detecting if there is a causality link between a subset of k alerts of the combination of k+1 alerts and the last alert of the combination, as a function of one or more causality rule,
    - as a function of detecting that there is a causality link, storing a causality object in a causality repository, wherein the causality object comprises an oriented link originating from the subset of k alerts of the combination of k+1 alerts identified as source alerts of the causality object, and pointing to the last alert of the combination of alerts identified as an end alert of the causality object,
    - filtering a possible combination of a number k+1 alerts, wherein the possible combination of a number k+1 alerts is a filtered combination of a number k+1 of alerts if the possible combination of a number k+1 alerts is a co-occurent combination of alerts in which no causality link has been detected,
- iterating to the step of forming and increasing the number k by one until the number k is equal to the number of alerts of the set or until no combination of a number k+1 of alerts has been filtered.

2. A method according to claim 1, wherein each alert is associated with one or more timestamp, each timestamp comprising a start date when the alert is detected to start, wherein a co-occurence rule is selected in the list consisting in:

   • the start dates of adjacent timestamps of alerts of the combination are separated by a period lower than a threshold period,
   • the frequency of having the start dates of adjacent timestamps of alerts of the combination separated by a period lower than a threshold period is higher than the frequency of having the start dates of two adjacent respective timestamps of random alerts lower than the threshold period,
   • some or each start dates of respective adjacent timestamps of alerts of the combination occur within a same respective time slot ($t_1$), wherein a time slot is an elementary partition of a selected time delay (T) in which the alerts of the combination occur,
   • an overlap duration is higher than a selected overlap duration threshold, wherein an overlap duration is a delay during which the alerts of the combination are all active, each timestamp further comprising an end date when the alert is detected to end, wherein an alert is active between the start date and the end date of a same timestamp.

3. A method according to claim 1, wherein each alert is associated with one or more timestamp, each timestamp comprising a start date when the alert is detected to start and an end date when the alert is detected to stop, wherein a causality rule is selected in the list consisting in:

   • the start dates of adjacent timestamps of the alerts of a subset of k alerts of the combination of k+1 alerts are always prior to the start date of adjacent timestamps of the last alert of the combination of k+1 alerts,
   • the start dates of adjacent timestamps of the alerts of a subset of k alerts of the combination of k+1 alerts are always prior to the start dates of adjacent timestamps of the last alert of the combination of k+1 alerts, and the end dates of the adjacent timestamp of the alerts of the subset of k alerts of the combination of k+1 alerts are always following to the end dates of the adjacent timestamps of the last alert of the combination of k+1 alerts,
   • each start date of adjacent timestamps of the alerts of a subset of k alerts of the combination of k+1 alerts is always followed by a start date of an adjacent timestamp of the last alert of the combination of k+1 alerts,
   • overlap durations of the last alert of the combination of k+1 alerts combination with the alerts of the subset of k alerts increases over the time, wherein an overlap duration is a delay during which the alerts of the combination are all active.

4. A method according to claim 1, wherein the step of detecting if there is a causality link between a subset of k alerts of the combination of k+1 alerts and the last alert of the combination further comprises, for each detected co-occurent combination of k+1 alerts, a step of:

   • forming a subset of k alerts of the detected co-occurent combination of k+1 alerts,
   • for the possible combination of a subset of k alerts, detecting if the last alert of the detected co-occurent combination of k+1 alerts is a consequence of the subset of k alerts as a function of the one or more causality rule.

5. A method according to claim 4, wherein the subset of k alerts is a first subset of k alerts, the method further comprising:

   • detecting that the last alert of the detected co-occurent combination of k+1 alerts is not a consequence of the first subset of k alerts,
   • forming a second subset of k alerts of the detected co-occurent combination of k+1 alerts,
   • for the second subset of k alerts, detecting if the last alert of the detected co-occurent combination of k+1 alerts is a consequence of the subset of k alerts as a function of the one or more causality rule.

6. A method for identifying a causality relationship between one or more alerts, comprising the method according to claim 1, and a step of:

   • assembling a plurality of causality objects to build an oriented causality tree, wherein a first causality object can only be assembled to a second causality object if the end alert of the first causality object is identical to the source alert of the second causality object.

7. A device for identifying causality objects comprising a causality link between two or more alerts, wherein an alert is produced by a fault occurring in a node of a cloud environment comprising nodes for running application programs, the device comprising:

> • an input interface configured for receiving a set of alerts,
> • a filtered combination repository (110) comprising filtered combination of a number k of alerts,
> • an alert combination module (101) connected to the input interface and to the filtered combination repository (110), the alert combination module (101) being further configured for forming all possible combinations of a number k+1 of the alerts of the set, wherein

>> ◦ the number k is firstly set to one, and for the number k equal to one, the possible combinations are formed by combining two different alerts of the set, whereas
>> ◦ for a number k higher than one, the possible combinations are formed by combining a filtered combination of a number k of alerts and an alert of the set which is not part of the filtered combination,
>> ◦ the alert combination module (101) being further configured for sending the formed possible combinations of a number k+1 alerts to a causality potential estimator module (102),

> • the causality potential estimator module (102) being adapted to, for each possible combination k+1 alerts, detect a co-occurent combination if the k+1 alerts of the combination are co-occurent, wherein
> ◦ a co-occurrence is detected as a function of one or more co-occurrence rule, the causality potential estimator module (102) being further configured to send the co-occurent combination to a causality evaluator module (104),
> • the causality evaluator module (104) being adapted to, as a response to receiving the co-occurent combination of k+1 alerts,

>> ◦ detecting if there is a causality link between a subset of k alerts of the combination of k+1 alerts and the last alert of the combination, as a function of one or more causality rule, and,
>> ◦ as a function of detecting that there is a causality link, sent the causality object to a causality repository, wherein the causality object comprises an oriented link originating from the subset of k alerts of the combination of k+1 alerts identified as source alerts of the causality object, and pointing to the last alert of the combination of alerts identified as an end alert of the causality object, and being further configured to,
◦ as a function of detecting that there is no causality link, sending (113) the co-occurent combination to the filtered combination repository (110),

> • the alert combination module (101) being further configured for:

>> ◦ iterate to the step of forming and increase the number k by one until the number k is equal to the number of alerts of the set.

8. A computer program product comprising instructions executable by a data processing device for performing the method in accordance with claim 1.

**Patentansprüche**

1. Verfahren zum Identifizieren von Kausalitätsobjekten, die eine Kausalitätsverbindung zwischen zwei oder mehreren Warnhinweisen umfassen, wobei ein Warnhinweis durch einen Fehler erzeugt wird, der in einem Knoten einer Cloud-Umgebung mit Knoten zum Ausführen von Anwendungsprogrammen auftritt, wobei das Verfahren umfasst:

> - Empfangen (111) einer Menge von Warnhinweisen (A bis E),
> - Bilden aller möglichen Kombinationen einer Anzahl k+1 der Warnhinweise der Menge, wobei die Anzahl k zunächst auf eins gesetzt wird, wobei für die Anzahl k gleich eins die möglichen Kombinationen durch Kombinieren von zwei verschiedenen Warnhinweisen der Menge gebildet werden, während für eine Anzahl k größer als eins die möglichen Kombinationen durch Kombinieren einer gefilterten Kombination einer Anzahl k von Warnhinweisen und eines Warnhinweises der Menge, der nicht Teil der gefilterten Kombination ist, gebildet werden,
> - für jede mögliche Kombination von k+1 Warnhinweisen Erfassen einer gleichzeitig vorkommenden Kombination, wenn die k+1 Warnhinweise der Kombination gleichzeitig vorkommen, wobei ein gleichzeitiges Vorkommen in Abhängigkeit von einer oder mehreren Regeln zum gleichzeitigen Vorkommen erfasst wird,
> - bei einer erfassten gleichzeitig vorkommenden Kombination von k+1 Warnhinweisen Erfassen, ob zwischen einer Teilmenge von k Warnhinweisen der Kombination von k+1 Warnhinweisen und dem letzten Warnhinweis der Kombination eine Kausalitätsverbindung in Abhängigkeit von einer oder mehreren Kausalitätsregeln besteht,

- in Abhängigkeit von der Erfassung, dass eine Kausalitätsverbindung besteht, Speichern eines Kausalitätsobjekts in einem Kausalitätsspeicher, wobei das Kausalitätsobjekt eine gerichtete Verbindung umfasst, die von der Teilmenge von k Warnhinweisen der Kombination von k+1 Warnhinweisen ausgeht, die als Ausgangswarnhinweise des Kausalitätsobjekt identifiziert wurden, und Zeigen auf den letzten Warnhinweis der Kombination von Warnhinweisen, die als Endwarnhinweis des Kausalitätsobjekts identifiziert wurden,

- Filtern einer möglichen Kombination einer Anzahl von k+1 Warnhinweisen, wobei die mögliche Kombination einer Anzahl von k+1 Warnhinweisen eine gefilterte Kombination einer Anzahl von k+1 Warnhinweisen ist, wenn die mögliche Kombination einer Anzahl von k+1 Warnhinweisen eine gleichzeitig vorkommende Kombination von Warnhinweisen ist, bei der keine Kausalitätsverbindung erfasst wurde,

- Iterieren bis zum Schritt des Bildens und Erhöhens der Anzahl k um eins, bis die Anzahl k gleich der Anzahl der Warnhinweise der Menge ist oder bis keine Kombination einer Anzahl k+1 von Warnhinweisen gefiltert wurde.

2.  Verfahren nach Anspruch 1, wobei jeder Warnhinweis mit einem oder mehreren Zeitstempeln verknüpft ist, wobei jeder Zeitstempel einen Anfangszeitpunkt umfasst, wann der Beginn des Warnhinweises erfasst wurde, wobei eine Regel zum gleichzeitigen Vorkommen in der Liste ausgewählt wird, bestehend in:

    • die Anfangszeitpunkte angrenzender Zeitstempel von Warnhinweisen der Kombination sind durch eine Zeitdauer getrennt, die kleiner als eine Schwellenwertzeitdauer ist,
    • die Häufigkeit, dass die Anfangszeitpunkte angrenzender Zeitstempel von Warnhinweisen der Kombination durch eine Zeitdauer getrennt sind, die kleiner als eine Schwellenwertzeitdauer ist, ist höher als die Häufigkeit, dass die Anfangszeitpunkte zweier angrenzender entsprechender Zeitstempel von zufälligen Warnhinweisen niedriger als die Schwellenwertzeitdauer sind,
    • einige oder alle Anfangszeitpunkte von jeweils angrenzenden Zeitstempeln von Warnhinweisen der Kombination kommen innerhalb eines gleichen jeweiligen Zeitschlitzes ($t_1$) vor, wobei ein Zeitschlitz eine elementare Unterteilung einer ausgewählten Zeitverzögerung (T) ist, in der die Warnhinweise der Kombination vorkommen,
    • eine Überlappungsdauer ist größer als ein ausgewählter Überlappungsdauerschwellenwert, wobei eine Überlappungsdauer eine Verzögerung ist, während der die Warnhinweise der Kombination alle aktiv sind, wobei jeder Zeitstempel ferner einen Endzeitpunkt umfasst, wann das Ende des Warnhinweises erfasst wurde, wobei ein Warnhinweis zwischen dem Anfangszeitpunkt und dem Endzeitpunkt desselben Zeitstempels aktiv ist.

3.  Verfahren nach Anspruch 1, wobei jeder Warnhinweis mit einem oder mehreren Zeitstempeln verknüpft ist, wobei jeder Zeitstempel einen Anfangszeitpunkt, wann der Beginn des Warnhinweises erfasst wurde, und einen Endzeitpunkt, wann das Ende des Warnhinweises erfasst wurde, umfasst, wobei eine Kausalitätsregel in der Liste ausgewählt wird, bestehend in:

    • die Anfangszeitpunkte angrenzender Zeitstempel der Warnhinweise einer Teilmenge von k Warnhinweisen der Kombination von k+1 Warnhinweisen liegen immer vor dem Anfangszeitpunkt der angrenzenden Zeitstempel des letzten Warnhinweises der Kombination von k+1 Warnhinweisen,
    • die Anfangszeitpunkte angrenzender Zeitstempel der Warnhinweise einer Teilmenge von k Warnhinweisen der Kombination von k+1 Warnhinweisen liegen immer vor den Anfangszeitpunkten angrenzender Zeitstempel des letzten Warnhinweises der Kombination von k+1 Warnhinweisen, und die Endzeitpunkte der angrenzenden Zeitstempel der Warnhinweise der Teilmenge von k Warnhinweisen der Kombination von k+1 Warnhinweisen folgen immer auf die Endzeitpunkte der angrenzenden Zeitstempel des letzten Warnhinweises der Kombination von k+1 Warnhinweisen,
    • auf jeden Anfangszeitpunkt angrenzender Zeitstempel der Warnhinweise einer Teilmenge von k Warnhinweisen der Kombination von k+1 Warnhinweisen folgt immer der Anfangszeitpunkt eines angrenzenden Zeitstempels des letzten Warnhinweises der Kombination von k+1 Warnhinweisen,
    • die Überlappungsdauer des letzten Warnhinweise der Kombination von k+1 Warnhinweisen mit den Warnhinweisen der Teilmenge von k Warnhinweisen nimmt im Laufe der Zeit zu, wobei eine Überlappungsdauer eine Verzögerung ist, während der die Warnhinweise der Kombination alle aktiv sind.

4.  Verfahren nach Anspruch 1, wobei der Schritt zum Erfassen, ob eine Kausalitätsverbindung zwischen einer Teilmenge von k Warnhinweisen der Kombination von k+1 Warnhinweisen und dem letzten Warnhinweis der Kombination besteht, ferner für jede erfasste, gleichzeitig vorkommende Kombination von k+1 Warnhinweisen einen Schritt umfasst zum:

• Bilden einer Teilmenge von k Warnhinweisen der erfassten gleichzeitig vorkommenden Kombination von k+1 Warnhinweisen,
• Erfassen in der möglichen Kombination einer Teilmenge von k Warnhinweisen, ob der letzte Warnhinweis der erfassten gleichzeitig vorkommenden Kombination von k+1 Warnhinweisen eine Folge der Teilmenge von k Warnhinweisen in Abhängigkeit von der einen oder den mehreren Kausalitätsregeln ist.

5. Verfahren nach Anspruch 4, wobei die Teilmenge von k Warnhinweisen eine erste Teilmenge von k Warnhinweisen ist, wobei das Verfahren ferner umfasst:

• Erfassen, dass der letzte Warnhinweis der erfassten gleichzeitig vorkommenden Kombination von k+1 Warnhinweisen keine Folge der ersten Teilmenge von k Warnhinweisen ist,
• Bilden einer zweiten Teilmenge von k Warnhinweisen der erfassten gleichzeitig vorkommenden Kombination von k+1 Warnhinweisen,
• Erfassen in der zweiten Teilmenge von k Warnhinweisen, ob der letzte Warnhinweis der erfassten gleichzeitig vorkommenden Kombination von k+1 Warnhinweisen eine Folge der Teilmenge von k Warnhinweisen in Abhängigkeit von der einen oder den mehreren Kausalitätsregeln ist.

6. Verfahren zum Identifizieren einer Kausalitätsbeziehung zwischen einer oder mehreren Warnhinweisen, umfassend das Verfahren nach Anspruch 1 und einen Schritt zum:

• Zusammensetzen einer Vielzahl von Kausalitätsobjekten zum Aufbauen eines gerichteten Kausalitätsbaums, wobei ein erstes Kausalitätsobjekt nur dann zu einem zweiten Kausalitätsobjekt zusammengesetzt werden kann, wenn der Endwarnhinweis des ersten Kausalitätsobjekts identisch mit dem Ausgangswarnhinweis des zweiten Kausalitätsobjekts ist.

7. Einrichtung zum Identifizieren von Kausalitätsobjekten, die eine Kausalitätsverbindung zwischen zwei oder mehreren Warnhinweisen umfassen, wobei ein Warnhinweis durch einen Fehler erzeugt wird, der in einem Knoten einer Cloud-Umgebung mit Knoten zum Ausführen von Anwendungsprogrammen auftritt, wobei die Einrichtung umfasst:

• eine Eingangsschnittstelle, die für das Empfangen einer Menge von Warnhinweisen eingerichtet ist,
• einen gefilterten Kombinationsspeicher (110), der eine gefilterte Kombination einer Anzahl k von Warnhinweisen umfasst,
• ein Warnhinweiskombinationsmodul (101), das mit der Eingangsschnittstelle und mit dem gefilterten Kombinationsspeicher (110) verbunden ist, wobei das Warnhinweiskombinationsmodul (101) ferner dazu eingerichtet ist, alle möglichen Kombinationen einer Anzahl k+1 der Warnhinweise der Menge zu bilden, wobei

◦ die Anzahl k zunächst auf eins gesetzt wird, und für die Anzahl k gleich eins die Kombinationsmöglichkeiten durch Kombinieren von zwei verschiedenen Warnhinweisen der Menge gebildet werden, wobei
◦ bei einer Anzahl k größer als eins die möglichen Kombinationen durch Kombinieren einer gefilterten Kombination einer Anzahl k von Warnhinweisen und einem Warnhinweis der Menge, der nicht Teil der gefilterten Kombination ist, gebildet werden,
◦ wobei das Warnhinweiskombinationsmodul (101) ferner dazu eingerichtet ist, die gebildeten möglichen Kombinationen einer Anzahl k+1 von Warnhinweisen an ein Kausalitätspotentialschätzmodul (102) zu senden,

• wobei das Kausalitätspotentialschätzmodul (102) dazu eingerichtet ist, für jede mögliche Kombination von k+1 Warnhinweisen eine gleichzeitig vorkommende Kombination zu erfassen, wenn die k+1 Warnhinweise der Kombination gleichzeitig vorkommen, wobei
◦ ein gleichzeitiges Vorkommen in Abhängigkeit von einer oder mehreren Regeln zum gemeinsamen Vorkommen erkannt wird, wobei das Kausalitätspotentialschätzmodul (102) ferner dazu eingerichtet ist, die gleichzeitig vorkommende Kombination an ein Kausalitätsbeurteilungsmodul (104) zu senden,
• das Kausalitätsbeurteilungsmodul (104) als Reaktion auf das Empfangen der gleichzeitig vorkommenden Kombination von k+1 Warnhinweisen dazu eingerichtet ist,

◦ zu erfassen, ob zwischen einer Teilmenge von k Warnhinweisen der Kombination von k+1 Warnhinweisen und dem letzten Warnhinweis der Kombination eine Kausalitätsverbindung in Abhängigkeit von einer oder mehreren Kausalitätsregeln besteht, und
◦ in Abhängigkeit vom Erfassen, dass eine Kausalitätsverbindung besteht, das Kausalitätsobjekt an einen Kausalitätsspeicher zu senden, wobei das Kausalitätsobjekt eine gerichtete Verbindung umfasst, die von der Teilmenge von k Warnhinweisen der Kombination von k+1 Warnhinweisen ausgeht, die als Ausgangswarnhinweise des Kausalitätsobjekts identifiziert wurden, und Zeigen auf den letzten Warnhinweis der Kombination von Warnhinweisen, die als Endwarnhinweis des Kausalitätsobjekts identifiziert wurden, und ferner dazu eingerichtet ist,

◦ in Abhängigkeit vom Erfassen, dass keine Kausalitätsverbindung besteht, Senden (113) der gleichzeitig vorkommenden Kombination an den gefilterten Kombinationsspeicher (110),

• das Warnhinweiskombinationsmodul (101) ferner dazu eingerichtet ist:
◦ bis zum Schritt des Bildens und Erhöhens der Anzahl k um eins zu iterieren, bis die Anzahl k gleich der Anzahl der Warnhinweise der Menge ist.

**8.** Computerprogrammprodukt umfassend Befehle, die durch eine Datenverarbeitungsvorrichtung zur Durchführung des Verfahrens gemäß Anspruch 1 ausführbar sind.

## Revendications

**1.** Procédé permettant d'identifier des objets de causalité comprenant un lien de causalité entre deux ou plusieurs alertes, dans lequel une alerte est produite par un défaut se produisant dans un nœud d'un environnement de nuage comprenant des nœuds destinés à l'exécution de programmes d'application, le procédé comprenant :

- la réception (111) d'un ensemble d'alertes (A à E),
- la formation de toutes les combinaisons possibles d'un nombre k+1 des alertes de l'ensemble, dans lequel le nombre k est tout d'abord fixé à un, dans lequel, pour un nombre k égal à un, les combinaisons possibles sont formées en combinant deux alertes différentes de l'ensemble, tandis que pour un nombre k supérieur à un, les combinaisons possibles sont formées en combinant une combinaison filtrée d'un nombre k d'alertes et une alerte de l'ensemble qui ne fait pas partie de la combinaison filtrée,
- pour chaque combinaison possible de k+1 alertes, la détection d'une combinaison cooccurrente si les k+1 alertes de la combinaison sont cooccurrentes, dans lequel une cooccurrence est détectée en fonction d'une ou de plusieurs règles de cooccurrence,

- pour une combinaison cooccurrente détectée de k+1 alertes, la détection de l'existence ou non d'un lien de causalité entre un sous-ensemble de k alertes de la combinaison de k+1 alertes et la dernière alerte de la combinaison, en fonction d'une ou de plusieurs règles de causalité,
- en fonction de la détection de l'existence d'un lien de causalité, le stockage d'un objet de causalité dans un référentiel de causalité, dans lequel l'objet de causalité comprend un lien orienté partant du sous-ensemble de k alertes de la combinaison de k+1 alertes identifiées comme étant des alertes sources de l'objet de causalité, et pointant vers la dernière alerte de la combinaison d'alertes, identifiée comme étant une alerte finale de l'objet de causalité,
- le filtrage d'une combinaison possible d'un nombre k+1 d'alertes, dans lequel la combinaison possible d'un nombre k+1 d'alertes est une combinaison filtrée d'un nombre k+1 d'alertes si la combinaison possible d'un nombre k+1 d'alertes est une combinaison cooccurrente d'alertes dans laquelle aucun lien de causalité n'a été détecté,
- l'exécution d'une itération jusqu'à l'étape de formation et l'incrémentation de un du nombre k jusqu'à ce que le nombre k soit égal au nombre d'alertes de l'ensemble ou jusqu'à ce qu'aucune combinaison d'un nombre k+1 d'alertes n'ait été filtrée.

**2.** Procédé selon la revendication 1, dans lequel chaque alerte est associée à un ou plusieurs marqueurs temporels, chaque marqueur temporel comprenant une date de début, lorsqu'il est détecté que l'alerte commence, dans lequel une règle de cooccurrence est sélectionnée dans la liste suivante :

• les dates de début de marqueurs temporels adjacents d'alertes de la combinaison sont séparées par une période inférieure à une période de seuil,
• la fréquence de la présence de dates de début de marqueurs temporels adjacents d'alertes de la combinaison séparées par une période inférieure à une période de seuil est supérieure à la fréquence de la présence de dates de début de deux marqueurs temporels respectifs adjacents d'alertes aléatoires inférieures à la période de seuil,
• certaines ou chacune des dates de début de marqueurs temporels adjacents respectifs des alertes de la combinaison se produisent dans un même créneau temporel respectif ($t_1$), dans lequel un créneau temporel est une partition élémentaire d'un temps de retard sélectionné (T) dans lequel les alertes de la combinaison se produisent,

• une durée de chevauchement est supérieure à un seuil de durée de chevauchement sélectionné, dans lequel une durée de chevauchement est un retard pendant lequel les alertes de la combinaison sont toutes actives, chaque marqueur temporel comprenant en outre une date de fin, lorsque l'alerte est détectée comme se terminant, dans lequel une alerte est active entre la date de début et la date de fin d'un même marqueur temporel.

3. Procédé selon la revendication 1, dans lequel chaque alerte est associée à un ou plusieurs marqueurs temporels, chaque marqueur temporel comprenant une date de début, lorsqu'il est détecté que l'alerte commence, et une date de fin, lorsqu'il est détecté que l'alerte se termine, dans lequel une règle de causalité est sélectionnée dans la liste suivante :

• les dates de début de marqueurs temporels adjacents des alertes d'un sous-ensemble de k alertes de la combinaison de k+1 alertes sont toujours antérieures à la date de début de marqueurs temporels adjacents de la dernière alerte de la combinaison de k+1 alertes,
• les dates de début de marqueurs temporels adjacents des alertes d'un sous-ensemble de k alertes de la combinaison de k+1 alertes sont toujours antérieures aux dates de début de marqueurs temporels adjacents de la dernière alerte de la combinaison de k+1 alertes, et les dates de fin du marqueur temporel adjacent des alertes du sous-ensemble de k alertes de la combinaison de k+1 alertes sont toujours postérieures aux dates de fin des marqueurs temporels adjacents de la dernière alerte de la combinaison de k+1 alertes,
• chaque date de début de marqueurs temporels adjacents des alertes d'un sous-ensemble de k alertes de la combinaison de k+1 alertes est toujours suivie d'une date de début d'un marqueur temporel adjacent de la dernière alerte de la combinaison de k+1 alertes,
• les durées de chevauchement de la dernière alerte de la combinaison de k+1 alertes avec les alertes du sous-ensemble de k alertes croissent avec le temps, dans lequel une durée de chevauchement est un retard pendant lequel les alertes de la combinaison sont toutes actives.

4. Procédé selon la revendication 1, dans lequel l'étape de détection de l'existence ou non d'un lien de causalité entre un sous-ensemble de k alertes de la combinaison de k+1 alertes et la dernière alerte de la combinaison comprend en outre, pour chaque combinaison cooccurrente détectée de k+1 alertes, une étape comprenant :

• la formation d'un sous-ensemble de k alertes de la combinaison cooccurrente détectée de k+1 alertes,
• pour la combinaison possible d'un sous-ensemble de k alertes, la détection du fait de savoir si la dernière alerte de la combinaison cooccurrente détectée de k+1 alertes est une conséquence du sous-ensemble de k alertes en fonction d'une ou de plusieurs règles de causalité.

5. Procédé selon la revendication 4, dans lequel le sous-ensemble de k alertes est un premier sous-ensemble de k alertes, le procédé comprenant en outre :

• la détection du fait que la dernière alerte de la combinaison cooccurrente détectée de k+1 alertes n'est pas une conséquence du premier sous-ensemble de k alertes,
• la formation d'un second sous-ensemble de k alertes de la combinaison cooccurrente détectée de k+1 alertes,
• pour le second sous-ensemble de k alertes, la détection du fait de savoir si la dernière alerte de la combinaison cooccurrente détectée de k+1 alertes est une conséquence du sous-ensemble de k alertes en fonction desdites une ou plusieurs règles de causalité.

6. Procédé permettant d'identifier une relation de causalité entre une ou plusieurs alertes, comprenant le procédé selon la revendication 1, et une étape comprenant :

• l'assemblage d'une pluralité d'objets de causalité pour construire un arbre de causalité orienté, dans lequel un premier objet de causalité ne peut être assemblé avec un second objet de causalité que si l'alerte finale du premier objet de causalité est identique à l'alerte source du second objet de causalité.

7. Dispositif permettant d'identifier des objets de causalité comprenant un lien de causalité entre deux ou plusieurs alertes, dans lequel une alerte est produite par un défaut se produisant dans un nœud d'un environnement de nuage comprenant des nœuds destinés à l'exécution de programmes d'application, le dispositif comprenant :

• une interface d'entrée configurée pour recevoir un ensemble d'alertes,
• un référentiel de combinaisons filtrées (110) comprenant une combinaison filtrée d'un nombre k d'alertes,
• un module de combinaison d'alertes (101) connecté à l'interface d'entrée et au référentiel de combinaisons filtrées (110), le module de combinaison d'alertes (101) étant en outre configuré pour former toutes les combinaisons possibles d'un nombre k+1 des alertes de l'ensemble, dans lequel

   ◦ le nombre k est d'abord fixé à un, et pour le nombre k égal à un, les combinaisons possibles sont formées en combinant deux alertes différentes de l'ensemble, tandis que
   ◦ pour un nombre k supérieur à un, les combinaisons possibles sont formées en combinant une combinaison filtrée d'un nombre k d'alertes et une alerte de l'ensemble qui ne fait pas partie de la combinaison filtrée,
   ◦ le module de combinaison d'alertes (101) étant en outre configuré pour envoyer les combinaisons possibles formées d'un nombre k+1 d'alertes à un module estimateur de potentiel de causalité (102),

• le module estimateur de potentiel de causalité (102) étant conçu, pour chaque combinaison possible de k+1 alertes, pour détecter une combinaison cooccurrente si les k+1 alertes de la combinaison sont cooccurrentes, dans lequel
   ◦ une cooccurrence est détectée en fonction d'une ou de plusieurs règles de cooccurrence, le module estimateur de potentiel de causalité (102) étant en outre configuré pour envoyer la combinaison cooccurrente à un module évaluateur de causalité (104),
• le module évaluateur de causalité (104) étant conçu, en réponse à la réception de la combinaison cooccurrente de k+1 alertes, pour

   ◦ la détection de l'existence ou non d'un lien de causalité entre un sous-ensemble de k alertes de la combinaison de k+1 alertes et la dernière alerte de la combinaison, en fonction d'une ou de plusieurs règles de causalité, et,
   ◦ en fonction de la détection de l'existence d'un lien de causalité, pour envoyer l'objet de causalité à un référentiel de causalité, dans lequel l'objet de causalité comprend un lien orienté partant du sous-ensemble de k alertes de la combinaison de k+1 alertes identifiées comme étant des alertes sources de l'objet de causalité, et pointant vers la dernière alerte de la combinaison d'alertes, identifiée comme étant une alerte finale de l'objet de causalité, et étant en outre configuré pour,
   ◦ en fonction de la détection de l'absence de lien de causalité, l'envoi (113) de la combinaison cooccurrente au référentiel de combinaisons filtrées (110),

   • le module de combinaison d'alertes (101) étant en outre configuré pour :
   ◦ l'exécution d'une itération jusqu'à l'étape de formation et l'incrémentation de un du nombre k jusqu'à ce que le nombre k soit égal au nombre d'alertes de l'ensemble.

8.  Produit de programme informatique comprenant des instructions exécutables par un dispositif de traitement de données pour mettre en œuvre le procédé selon la revendication 1.

FIG.1

FIG.2

FIG.3

FIG.4

FIG.5

FIG.6

FIG.7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3128425 A